# EUROPÄISCHE PATENTSCHRIFT

(11) **EP 3 211 739 B1**
(45) Veröffentlichungstag und Bekanntmachung des Hinweises auf die Patenterteilung: **04.12.2019**
(21) Anmeldenummer: 17154899.3
(22) Anmeldetag: 07.02.2017
(51) Int. Cl.: H02G 7/12

(54) **BÜNDELABSTANDSHALTER UND FREILEITUNG MIT EINEM SOLCHEN**
BUNDLE SPACER AND TRANSMISSION LINE COMPRISING SAME
ÉCARTEUR DE CHEVILLE ET LIGNES AÉRIENNE LE COMPRENANT

(30) Priorität: 23.02.2016 DE 102016202788
(43) Veröffentlichungstag der Anmeldung: 30.08.2017
(73) Patentinhaber: Richard Bergner Elektroarmaturen GmbH & Co. KG, 01445 Radebeul (DE)
(72) Erfinder: MURR, Manfred, 91522 Ansbach (DE); MOSER, Reinhold, 90768 Fürth (DE)
(74) Vertreter: FDST Patentanwälte

(56) Entgegenhaltungen:
- WO-A1-2013/098864
- DE-A1- 2 505 858
- US-A- 3 076 866
- US-A- 5 371 320
- US-B2- 8 203 074

## Beschreibung

Die Erfindung betrifft einen Bündelabstandshalter zur Halterung und Beabstandung von Seilen einer Freileitung, nämlich von mehreren Leiterseilen und einem Tragseil, mit einem Traggestell, welches die Seile in einem montierten Zustand in einer Grundstellung anordnet und welches für jedes der Seile jeweils eine Aufnahme zur Befestigung aufweist, nämlich mehrere Leiterseilaufnahmen und eine Tragseilaufnahme, wobei die Seile in der Grundstellung senkrecht zu einer Querebene verlaufen. Weiterhin betrifft die Erfindung eine Freileitung mit einem solchen Bündelabstandshalter.

Ein entsprechender Bündelabstandshalter ist beispielsweise in der DE 10 2013 007 392 A1 beschrieben.

Eine Freileitung dient allgemein der oberirdischen Stromführung. Dazu sind Leiterseile entlang mehrerer Tragmasten abgespannt. Oftmals sind dabei mehrere Leiterseile in einem Bündelleiter zusammengefasst, welcher seinerseits ein Phasenleiter ist, d.h. eine einzelne Phase der Freileitung bildet. Häufig weist eine Freileitung mehrere Phasen auf und entsprechend mehrere Bündelleiter. Aufgrund elektrischer Erwägungen werden die einzelnen Leiterseile einer Phase üblicherweise mittels mehrerer Bündelabstandshalter entlang der Freileitung in festem Abstand relativ zueinander angeordnet. Beispielsweise ordnet ein jeweiliger Bündelabstandshalter wie in der oben genannten DE 10 2013 007 392 A1 gezeigt vier Leiterseile auf Ecken eines gedachten Quadrats an, welches eine Seitenlänge von z.B. 400mm aufweist, sodass die einzelnen Leiterseile in einem solchen Abstand zueinander parallel verlaufen.

In der DE 10 2013 007 392 A1 ist ebenfalls beschrieben, dass es zur mechanischen Entlastung möglich ist, einem Bündelleiter ein zusätzliches Tragseil hinzuzufügen, welches entlang der Leiterseile verläuft und mit diesen über den Bündelabstandshalter mechanisch verbunden ist.

Weitere Bündelabstandshalter sind beschrieben in DE 25 05 858 A1, US 3,076,866 A, WO 2013/098864 A1 und US 5,371,320 A.

Da Freileitungen direkt den Witterungseinflüssen ausgesetzt sind, ergibt sich ganz allgemein das Problem, dass eine Freileitung dynamischen Lasten, beispielsweise Wind- und Schneelasten ausgesetzt ist. Besonders die Seile bieten typischerweise eine große Angriffsfläche und werden durch solche Lasten sowie die dabei auftretenden Kräfte potentiell starken mechanischen Belastungen ausgesetzt. Je nach Aufhängung oder Befestigung der Seile an den Tragmasten und den Bündelabstandshaltern wirken hierbei punktuell unter Umständen sehr große Kräfte, welche bei entsprechender Witterung sogar zu einer Beschädigung führen können. Hinzu kommt, dass die Seile schon in unbelastetem Zustand aufgrund des Abspannen zwischen den Masten mit einer gewissen Vorspannung belastet sind.

Vor diesem Hintergrund ist es eine Aufgabe der Erfindung, einen Bündelabstandshalter anzugeben, welcher zum Einen die Seile einer Freileitung hinreichend zueinander fixiert, zum Anderen den Seilen jedoch ein gewisses Maß an Bewegung erlaubt, um mögliche Belastungen entlang der Seile zu verteilen und punktuelle Belastungen zu reduzieren oder zu vermeiden. Weiterhin soll eine entsprechend verbesserte Freileitung angegeben werden.

Die Aufgabe wird erfindungsgemäß gelöst durch einen Bündelabstandshalter mit den Merkmalen gemäß Anspruch 1 sowie durch eine Freileitung mit den Merkmalen gemäß Anspruch 14. Vorteilhafte Ausgestaltungen, Weiterbildungen und Varianten sind Gegenstand der Unteransprüche. Dabei gelten die Ausführungen im Zusammenhang mit dem Bündelabstandshalter sinngemäß auch für die Freileitung und umgekehrt.

Der Bündelabstandshalter dient zur Halterung und Beabstandung von Seilen einer Freileitung, nämlich von mehreren Leiterseilen und einem Tragseil. Die Seile sind beispielsweise Stahlseile. Die Leiterseile und das Tragseil bilden insbesondere einen Bündelleiter, welcher vorzugsweise eine Phase der Freileitung ist. Die Leiterseile sind im Betrieb der Freileitung dann stromführend. Der Bündelabstandshalter weist ein Traggestell auf, welches die Seile in einem montierten Zustand in einer Grundstellung anordnet und welches für jedes der Seile jeweils eine Aufnahme zur Befestigung aufweist, nämlich mehrere Leiterseilaufnahmen und eine Tragseilaufnahme. Dabei verlaufen die Seile in der Grundstellung senkrecht zu einer Querebene, welche insbesondere vom Traggestell aufgespannt ist. Erfindungsgemäß weist das Traggestell ein Gelenk auf, mittels welchem zumindest eines, alternativ mehrere oder alle der Leiterseile relativ zum Tragseil um eine Drehachse drehbeweglich gehaltert ist bzw. sind. Die Drehachse verläuft hierbei senkrecht zur Querebene, sodass das Leiterseil in der Querebene um die Drehachse drehbar ist und dadurch relativ zum Tragseil beweglich ist.

Ein mit der Erfindung erzielter Vorteil besteht insbesondere darin, dass die Seile mittels des Bündelabstandshalters zunächst zwar in der Grundstellung definiert angeordnet sind, jedoch aufgrund der Drehbeweglichkeit der Seile relativ zueinander ein gewisses Maß an Bewegung erlaubt ist, wodurch mechanische Belastungen bei einer Krafteinwirkung, beispielsweise bei Wind- oder Schneelasten, effizient aufgenommen werden. Mittels des Gelenks ist eine relative Beweglichkeit zwischen Tragseil und Leiterseil aus der Grundstellung heraus realisiert. Die Grundstellung ist hierbei insbesondere ein unbelasteter Zustand, in welchem die Seile in festen und vorgegebenen Abständen zueinander angeordnet sind. Dabei werden die Abstände insbesondere in der Querebene gemessen.

Ein weiterer Vorteil besteht insbesondere darin, dass auch eine Torsion des Tragseils oder allgemein eine Torsionsdifferenz zwischen Leiterseil und Tragseil aufgrund der Drehbeweglichkeit relativ zueinander ausgleichbar ist. Bei einer Fixierung des Tragseils relativ zu den Leiterseilen würde eine Torsion eines der Seile zu einer nachteiligen Verzerrung der Gesamtanordnung führen, wodurch möglicherweise auch die elektrischen Eigenschaften des Bündelleiters negativ beeinflusst werden. Durch die relative Drehbeweglichkeit wird dies jedoch verhindert. Ein jeweiliges Seil ist in montiertem Zustand im Bündelabstandshalter in der entsprechenden Aufnahme befestigt und dadurch relativ zu dieser festgehalten. Daher gelten die Ausführungen bezüglich der Aufnahmen sinngemäß auch für die darin in montiertem Zustand befestigten Seile sowie umgekehrt. Zudem weist das Traggestell insbesondere einen an sich starren Rahmen auf, an welchem das Gelenk und die Aufnahmen angebracht sind. Der Rahmen oder auch das gesamte Traggestell sind beispielsweise aus Metall gefertigt.

Zweckmäßigerweise sind die Seile jeweils in axialer Richtung am Bündelabstandshalter und in den Ausnehmungen fixiert. Darunter wird verstanden, dass die Seile in deren jeweiliger Aufnahme befestigt sind, beispielsweise festgeklemmt und dadurch ein Verrutschen des jeweiligen Seils in dessen Aufnahme verhindert ist. Die Seile sind somit relativ zum Traggestell axial, d.h. in Seillängsrichtung nicht verschiebbar. Dadurch ist vor Allem ein Verrutschen des Bündelabstandshalters entlang der Seile und somit entlang der Freileitung vorteilhaft verhindert. Insbesondere sind dann zwei entlang der Freileitung aufeinanderfolgend angeordnete Bündelabstandshalter in einem festen Längsabstand zueinander beabstandet, z.B. etwa 40m.

Die Seile verlaufen generell senkrecht zur Querebene, sodass diese zugleich eine Schnittebene des Bündelleiters darstellt. In der Querebene sollen die Seile mittels des Bündelabstandhalters in einem bestimmten Muster und mit vorgegebenen Abständen zueinander angeordnet sein. Dazu weist das Traggestell z.B. geeignete Verstrebungen auf, welche die Aufnahmen für die Seile untereinander verbinden und insbesondere einen Rahmen bilden.

In einer geeigneten Ausgestaltung weist das Traggestell mehrere Leiterseilaufnahmen auf, welche ein Mehreck bilden und die Tragseilaufnahme ist am Rand des Mehrecks oder außerhalb desselben angeordnet. Zweckmäßigerweise ist das Tragseil am oberen Rand oder oberhalb des Mehrecks angeordnet, sodass sich aufgrund der Gewichtskraft eine definierte Grundstellung ergibt. Das Mehreck ist insbesondere ein gleichmäßiges Mehreck und vorzugsweise ein Viereck oder Dreieck. Dass Mehreck weist dann mehrere Seiten mit gleicher Seitenlänge auf. Eine solche Anordnung ist unter elektrischen Gesichtspunkten besonders vorteilhaft. Dabei wird unter "am Rand angeordnet" insbesondere verstanden, dass die Tragseilaufnahme entweder auf einer Seite des Mehrecks angeordnet ist oder innerhalb des Mehrecks angeordnet ist und dabei von einer der Seiten um maximal 10% der Seitenlänge beabstandet ist.

Das Gelenk ist als Drehlager ausgebildet, in welchem das Tragseil befestigbar ist. Hierbei ist mittels des Gelenks das Traggestell relativ zum Tragseil drehbeweglich gehaltert und in der Querebene um das Tragseil herum drehbar. Ebenso sind dadurch die am Traggestell befestigten Leiterseile um das Tragseil herum drehbar. Dadurch ist vorteilhaft eine Torsion des Tragseils möglich, ohne die Anordnung der Leiterseile zu stören. Durch die Halterung des Tragseils in dem Gelenk fällt die Drehachse mit einer Längsachse des Tragseils zusammen, d.h. mit einer Tragseillängsachse.

In einer geeigneten Weiterbildung weist das Gelenk ein Klemmteil auf, welches die Tragseilaufnahme bildet. Das Tragseil ist somit im Gelenk eingeklemmt. Das Klemmteil ist dabei ein Teil des Gelenks, welcher gegen einen anderen Teil des Gelenks beweglich ist. Bezüglich des Tragseils ist das Klemmteil insbesondere unbeweglich. Beispielsweise ist das Klemmteil als zwei Halbschalen ausgeführt, welche das Tragseil umgreifen und insbesondere eine Verdickung bilden, welche in einer geeigneten Hülse oder Pfanne einsitzt und im Kombination mit dieser das Drehlager bildet. Die Halbschalen sind beispielsweise miteinander verschraubt. Alternativ ist zusätzlich ein Formteil am Tragseil befestigt, z.B. mittels einer Spiralklemme, und das Formteil sitzt formschlüssig im Klemmteil ein, zur Ausbildung einer schraubenlosen Befestigung. Das Formteil kann hierbei einteilig oder mehrteilig ausgebildet sein.

Bevorzugterweise weist das Traggestell ein Kippgelenk auf, mittels welchem die Leiterseile, d.h. zumindest eines der, einige oder alle Leiterseile, relativ zum Tragseil kippbeweglich um eine Kippachse gehaltert sind, wobei die Kippachse parallel zur Querebene und vorzugsweise innerhalb dieser verläuft. Dadurch ist vorteilhaft eine Vor- und Rückwärtsbewegung bezüglich der Seillängsrichtung nach Art einer Schaukel ermöglicht, wodurch die Flexibilität der Gesamtanordnung erhöht ist und Lasten besser aufgenommen werden können.

In einer bevorzugten Ausgestaltung ist das Gelenk als Kugelgelenk ausgebildet, mit einer Kugel und einer Pfanne. Dabei bildet das Gelenk zugleich das Drehlager und das Kippgelenk, d.h. das Drehlager und das Kippgelenk sind gemeinsam in einem Kugelgelenk integriert, welches sowohl eine Drehbeweglichkeit als auch eine Kippbeweglichkeit gewährleistet. Ein solches Gelenk ist besonders kompakt. In Kombination mit der Halterung des Tragseils im Gelenk ist dann die Kugel zweckmäßigerweise zugleich das Klemmteil und am Tragseil entsprechend befestigt. Die Kugel mit dem Tragseil sitzt in der Pfanne ein und ermöglicht einerseits eine Drehbewegung um die Tragseilachse und andererseits eine Kippbewegung, d.h. eine Verkippung der Tragseilachse relativ zum Traggestell. In dieser Ausgestaltung sind dann insbesondere alle Leiterseile aufgrund deren Befestigung am Traggestell gleichermaßen dreh- und kippbeweglich relativ zum Tragseil gehaltert. Die Drehbewegung ist prinzipbedingt vorteilhaft nicht beschränkt. Die Kippbewegung ist dagegen zweckmäßigerweise durch einen geeigneten Anschlag begrenzt, welcher beispielsweise durch die Pfanne des Gelenks, genauer gesagt deren Ausdehnung oder Öffnungskontur ausgebildet ist.

Geeigneterweise weist das Traggestell einen Schwenkarm auf, zur Halterung eines der Leiterseile, sowie weiterhin ein Armgelenk, mittels welchem der Schwenkarm in der Querebene drehbar gelagert ist, und zwar um eine Armachse, welche insbesondere senkrecht zur Querebene verläuft. Der Schwenkarm ist dabei über das Armgelenk am Rahmen angebracht. In einer ersten Variante entspricht das Armgelenk dem eingangs bereits erwähnten Gelenk, sodass die Drehbeweglichkeit des Leiterseils relativ zum Tragseil alleinig mittels des Armgelenks realisiert ist. Hierbei ist in einer Weiterbildung das Armgelenk als Kugelgelenk ausgebildet. In einer zweiten Variante ist das Armgelenk als zusätzliches Gelenk ausgebildet, sodass dann sozusagen eine doppelte Drehbeweglichkeit des Leiterseils realisiert ist, nämlich einmal mittels eines ersten Gelenks um die Tragseillängsachse und einmal mittels eines zweiten Gelenks, dem Armgelenk, um die Armachse. Dabei ist in jedem Fall sowohl eine Ausgestaltung des jeweiligen Gelenks als einfaches Drehlager möglich als auch als Kugelgelenk.

In einer geeigneten Ausgestaltung ist der Schwenkarm in der Grundstellung hängend gelagert. Insbesondere ist der Schwenkarm hierzu über das Armgelenk am Rahmen aufgehängt. In dieser besonders einfachen Ausgestaltung ist die Grundstellung insbesondere durch die auf das jeweilige Leiterseil wirkende Gewichtskraft gegeben. Jegliche Auslenkung des Schwenkarms erfolgt dann aus dieser hängenden Grundstellung heraus.

In einer vorteilhaften Weiterbildung weist das Traggestell, insbesondere der Rahmen, einen Anschlag auf, welcher eine Drehung des Schwenkarms, welche mittels des Armgelenks erfolgt, begrenzt. Dadurch ist vorteilhaft sichergestellt, dass das Leiterseil lediglich in einem genau definierten und beschränkten Maße aus der Grundstellung heraus beweglich ist, wodurch insbesondere eine zu starke Beeinflussung der elektrischen Eigenschaften oder eine Verwirrung der Seile miteinander vermieden wird. Insbesondere ist der Schwenkarm aus der Grundstellung heraus in zwei Richtungen drehbar. Zweckmäßigerweise ist dann in beiden Richtungen jeweils ein Anschlag ausgebildet.

Bevorzugterweise beschränkt der Anschlag die Drehung des Schwenkarms auf einen Winkel von 30°. Dadurch ist ein übermäßiges Verdrehen des Leiterseils relativ zum Tragseil verhindert, bei gleichzeitig geeigneter Beweglichkeit des einzelnen Leiterseils.

In einer geeigneten Alternative zur Ausgestaltung mit hängendem Schwenkarm ist dieser Schwenkarm mittels einer Armfederung federelastisch in der Grundstellung fixiert. Insbesondere gegenüber der hängenden Ausgestaltung lässt sich der Bündelabstandshalter dadurch kompakter auslegen, insbesondere derart, dass die Aufnahmen für die Seile, zumindest für die Leiterseile an extremalen Positionen des Traggestells angeordnet sind. Die Aufnahmen bilden dann äußerste Punkte des Traggestells, d.h. dieses liegt im Wesentlichen innerhalb des durch die Leiterseilaufnahmen gebildeten Mehrecks. Die Armfederung ist insbesondere nach Art einer Dämpfung ausgeführt, mit einer Nulllage, welche in der Grundstellung eingenommen wird und aus welcher heraus der Schwenkarm in zwei entgegengesetzten Richtungen drehbar ist. Beispielsweise ist die Armfederung als Blattfeder ausgebildet, und somit besonders robust und kostengünstig.

In einer geeigneten Ausgestaltung beschränkt die Armfederung eine Drehung des Schwenkarms ausgehend von der Grundstellung in beiden Richtungen. Die Drehung ist vorzugsweise auf einen Winkel von 12° in einer jeweiligen Richtung begrenzt. Dadurch ist ein übermäßiges Verdrehen des Leiterseils relativ zum Tragseil verhindert, bei gleichzeitig geeigneter Beweglichkeit des einzelnen Leiterseils. Zur Beschränkung wird insbesondere die Federstärke oder die Dämpfung der Armfederung geeignet ausgewählt.

In einer weiteren geeigneten Ausgestaltung sind zwei Leiterseile jeweils mittels eines Schwenkarms drehbar gehaltert und die Armfederung fixiert die beiden Schwenkarme federelastisch in der Grundstellung. Die Armfederung ist dazu beispielsweise als durchgängiges Federelement ausgebildet, welches von dem einen der Schwenkarme über oder durch den Rahmen und generell über oder durch das Traggestell zum anderen der Schwenkarme reicht. Diese Ausgestaltung ist besonders einfach. Dabei ist die Armfederung zweckmäßigerweise an einem oder mehreren Lagerpunkten am Rahmen oder Traggestell gelagert, sodass die Federelastizitäten der beiden Schwenkarme unabhängig voneinander sind.

Alternativ zu der weiter oben genannten Ausgestaltung mit Kugelgelenk ist das Drehlager z.B. als Rollen- oder Zylinderlager ausgebildet, mittels welchem lediglich eine Drehbeweglichkeit um die Tragseillängsachse realisiert ist. Im Fall einer zusätzlichen Kippbeweglichkeit ist diese dann zweckmäßigerweise über ein separates und räumlich vom Drehlager getrenntes Kippgelenk realisiert.

Ausgehend von einer Ausgestaltung mit Kippgelenk weist das Traggestell in einer vorteilhaften Weiterbildung einen Kipparm auf, mit zumindest einer, vorzugsweise zwei Leiterseilaufnahmen, wobei der Kipparm mittels des Kippgelenks mit der Tragseilaufnahme verbunden ist, zur Verkippung des Kipparms relativ zum Tragseil. Der Kipparm erstreckt sich insbesondere in der Querebene. Der Kipparm hängt insbesondere über das Kippgelenk an der Tragseilaufnahme und von dieser nach Art eines Pendels herunter. Bei einem Kipparm mit zwei Leiterseilaufnahmen sind diese zweckmäßigerweise jeweils an gegenüberliegenden Enden des Kipparms angeordnet, sodass eine der Leiterseilaufnahmen insbesondere in direkter Nähe des Kippgelenks positioniert ist und die andere der Leiterseilaufnahmen entsprechend beabstandet hiervon. Zweckmäßigerweise liegen die Leiterseilaufnahmen und die Tragseilaufnahme gemeinsam auf einer Geraden, welche parallel zur Querebene verläuft.

In einer geeigneten Ausgestaltung weist das Traggestell zwei Tragarme auf, mit jeweils zumindest einer, vorzugsweise zwei Leiterseilaufnahmen. Weiterhin weist das Traggestell hierbei zwei Tragseilaufnahmen, welche jeweils mit einem der Tragarme verbunden sind, wobei die beiden Tragseilaufnahmen über eine Querverstrebung miteinander verbunden sind. Eine jeweilige Tragseilaufnahme und der zugehörige Tragarm bilden dabei ein Teilgestell des Traggestells. Die beiden Teilgestelle sind dann über die Querverstrebung verbunden und insbesondere mechanisch miteinander gekoppelt. Hierbei bilden insbesondere die Tragarme, die Tragseilaufnahmen und die Querverstrebung einen Rahmen des Traggestells.

In einer vorteilhaften Weiterbildung ist die Querverstrebung als Schergelenk ausgebildet, mittels dessen die Tragseile in montiertem Zustand relativ zueinander scherbeweglich angeordnet sind. Unter "schwenkbeweglich" wird hier insbesondere verstanden, dass die Tragseile in axialer Richtung, d.h. in Richtung der Tragseillängsachsen gegeneinander verschiebbar sind. In einer vorteilhaften Variante mit zusätzlichen Kippgelenken ergibt sich in Kombination mit der Drehbeweglichkeit durch das Gelenk insbesondere ein insgesamt ähnliches Maß an Kippbeweglichkeit der Leiterseile relativ zu den Tragseilen wie mit einem Kugelgelenk bei lediglich einem Tragseil.

Alternativ oder zusätzlich sind die Tragarme bevorzugterweise über ein Federelement federelastisch miteinander verbunden, zur reversiblen Auslenkung aus der Grundstellung heraus. Die Auslenkung erfolgt insbesondere seitlich, d.h. in der Querebene, sodass sich der Abstand zwischen den Tragarmen vergrößert oder verringert. Bei einer Ausgestaltung mit vier Leiterseilen bilden die Tragarme mit der Querverstrebung und dem Federelement ein Rechteck, welches aufgrund der Federelastizität bei einer seitlichen Belastung in ein Trapez oder Parallelogramm überführbar ist. Das Federelement sorgt dann vorteilhaft für eine automatische Rückstellkraft in die Grundstellung. Analoges gilt auch für das durch die Leiterseilaufnahmen gebildete Mehreck.

In einer bevorzugten Ausgestaltung ermöglicht das Federelement auch eine Scherbewegung der Tragarme, insbesondere in Kombination mit einer als Schergelenk ausgebildeten Querverstrebung. Beispielsweise ist das Federelement als Federring ausgebildet, d.h. z.B. als ringförmig gebogener Draht, welcher insbesondere endseitig der Tragarme befestigt ist und bei einer Scher- und/oder Drehbewegung zu einer Ellipse verformt wird.

In einer bevorzugten Ausgestaltung ist der Kipparm der Tragarm, d.h. der Tragarm ist über ein Kippgelenk mit der Tragseilaufnahme verbunden und um eine Kippachse drehbar, wobei die Kippachse insbesondere parallel zur Querebene verläuft. Der Tragarm ist dann insbesondere nach Art eines Pendels an der Tragseilaufnahme aufgehängt. Bei der Verwendung mehrerer Tragarme ist dann vorteilhaft eine separate Kippbewegung für eine Teilgruppe der Leiterseile gegenüber den übrigen Leiterseilen möglich, d.h. die Kippbewegungen verschiedener Teilgestelle sind voneinander entkoppelt.

Eine erfindungsgemäße Freileitung weist eine Anzahl an Tragmasten auf sowie zumindest einen Bündelleiter, welcher entlang der Tragmasten abgespannt ist. Der Bündelleiter weist mehrere Seile auf, nämlich mehrere Leiterseile und zumindest ein Tragseil. Die Freileitung weist weiterhin einen Bündelabstandshalter wie oben beschrieben auf, mittels welchem die Seile gehaltert und voneinander beabstandet sind, wobei der Bündelabstandshalter ein Traggestell aufweist, welches die Seile in einer Grundstellung anordnet und welches für jedes der Seile jeweils eine Aufnahme zur Befestigung aufweist, nämlich mehrere Leiterseilaufnahmen und eine Tragseilaufnahme. Die Seile verlaufen in der Grundstellung senkrecht zu einer Querebene und das Traggestell weist ein Gelenk auf, mittels welchem zumindest eines der Leiterseile relativ zum Tragseil um eine Drehachse drehbeweglich gehaltert ist, welche senkrecht zur Querebene verläuft.

In einer besonders bevorzugten Ausgestaltung ist lediglich das Tragseil des Bündelleiters an den Tragmasten abgespannt und die Leiterseile sind mittels des Bündelabstandshalters am Tragseil gehaltert. Dieser Ausgestaltung liegt insbesondere die Überlegung zugrunde, dass zur Reduzierung der Höhe der Freileitung die Seile der Freileitung straffer gespannt werden müssen, um Vorgaben bezüglich des Abstands der Seile zum Boden einzuhalten. Dadurch unterliegen die Leiterseile jedoch höheren mechanischen Belastungen. Um die Leiterseile dann möglichst weitgehend bezüglich solcher konstruktiven Belastungen zu entlasten und eine verringerte Bauhöhe zu ermöglichen, werden die Leiterseile dann nicht direkt an den Tragmasten abgespannt, sondern lediglich am Tragseil befestigt, welches dann am Tragmasten angebracht wird, z.B. mittels einer geeigneten Klemme. Zur Halterung der Leiterseile lediglich am Tragseil, d.h. bei einer Freileitung mit indirekt abgespannten Leiterseilen, wird dann vorteilhafterweise ein Bündelabstandshalter in einer der oben beschriebenen Ausgestaltungen verwendet. Diese Ausgestaltungen entfalten im Zusammenhang mit lediglich am Tragseil gehalterten Leiterseilen besondere Vorteile.

Nachfolgend werden bevorzugte Ausführungsbeispiele der Erfindung anhand einer Zeichnung näher erläutert. Darin zeigen jeweils schematisch und in einer perspektivischen Ansicht:
- Fig. 1: eine Freileitung,
- Fig. 2: eine Phase der Freileitung,
- Fig. 3: einen Bündelabstandshalter,
- Fig. 4: einen weiteren Bündelabstandshalter, und
- Fig. 5: einen weiteren Bündelabstandshalter.

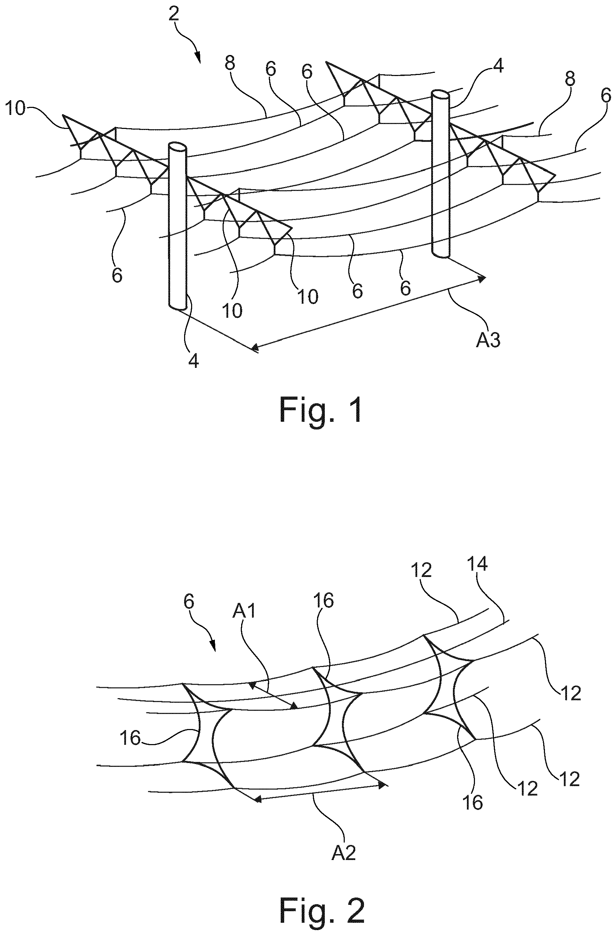

In Fig. 1 ist ein Ausschnitt einer Freileitung 2 dargestellt, mit mehreren Tragmasten 4, entlang welcher mehrere Phasen der Freileitung 2 abgespannt sind. Die Freileitung 2 ist hier eine Hochspannungs-Freileitung mit sechs Phasen, welche als nebeneinander verlaufende Bündelleiter 6 ausgebildet sind. Über den Phasen sind weiterhin zwei Erdungsseile 8 abgespannt. Zur Halterung der Bündelleiter 6 weist der Tragmast 4 in Fig. 1 zusätzliche Tragketten 10 auf, an welchen die Phasen abgehängt sind.

Einer der in Fig. 1 stark vereinfacht gezeigten Bündelleiter 6 ist in Fig. 2 genauer dargestellt. Der Bündelleiter 6 weist mehrere Seile 12, 14 auf, hier vier Leiterseile 12, welche im Betrieb stromführend sind, sowie ein Tragseil 14, welches nicht stromführend ist. Die Seile 12, 14 sind entlang des Bündelleiters 6 mittels Bündelabstandshaltern 16 mechanisch verbunden und in einer Grundstellung gehaltert. Desweiteren sind die Leiterseile 12 hier lediglich am Tragseil 14 gehaltert, und zwar mittels der Bündelabstandshalter 16. Die Leiterseile 12 sind dagegen nicht direkt mit dem Tragmasten 4 verbunden, sondern an diesen lediglich mittelbar über das Tragseil 14 abgespannt. Desweiteren sind die Leiterseile 12 hier zur mechanischen Entlastung katenarisch am Tragseil 14 aufgehängt, was in Fig. 2 durch den im Vergleich zu dem straffer gespannten Tragseil 14 verstärkten Durchhang der Leiterseile 12 angedeutet ist.

Bei einer Krafteinwirkung, beispielsweise aufgrund einer Wind- oder Schneelast ermöglichen die speziellen Bündelabstandshalter 16 eine gewisse Auslenkung aus der gezeigten Grundstellung heraus, sodass mechanische Belastungen effektiv aufgenommen und entlang des Bündelleiters 6 verteilt werden können und punktuelle Belastungen vermieden werden. Zudem ist eine Torsion eines der Seile 12, 14 tolerierbar, ohne den gesamten Bündelleiter 6 zu stark zu verformen. Insgesamt gewährleisten die Bündelabstandshalter 16 somit, dass die Seile 12, 14 relativ zueinander nur in eingeschränktem Maße beweglich sind, jedoch genug, um Belastungen effektiv aufzufangen. Bei geringer oder ausbleibender Belastung wird dagegen die Grundstellung eingenommen. Beispielsweise weisen die Leiterseile 12 zueinander einen Abstand A1 von etwa 40cm auf und die Bündelabstandshalter 16 sind entlang des Bündelleiters 6 in Abständen A2 von etwa 40m angeordnet. Zwei aufeinanderfolgende Freimasten 4 sind beispielsweise in einem Abstand A3 von etwa 400m voneinander beabstandet.

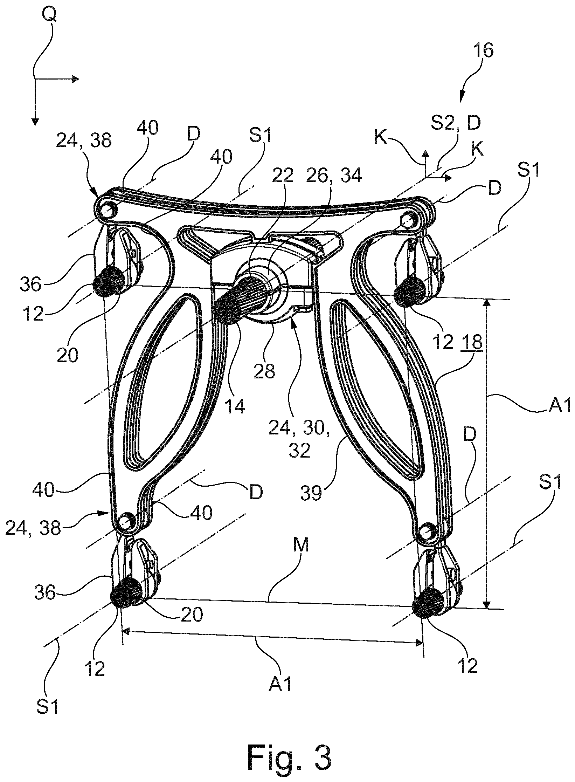

In den Fig. 3, 4 und 5 ist jeweils ein Ausführungsbeispiel für einen Bündelabstandshalter 16 gezeigt. Die im Zusammenhang mit einer dieser Figuren erläuterten Merkmale müssen aber nicht notwendigerweise genau in der jeweils gezeigten Kombination vorliegen, sondern vielmehr sind weitere, nicht gezeigte und dennoch geeignete Varianten denkbar, welche verschiedene Merkmale der gezeigten Ausführungsbeispiele kombinieren. Die gezeigten Ausführungsbeispiele stellen jedoch besonders bevorzugte Varianten dar.

Grundsätzlich dient ein Bündelabstandshalter 16 zur Halterung und Beabstandung von mehreren Leiterseilen 12 und einem Tragseil 14 und weist hierzu ein Traggestell 18 auf, welches die Seile 12, 14 in montiertem Zustand in der Grundstellung anordnet. Dazu weist das Traggestell 18 für jedes der Seile 12, 14 jeweils eine Aufnahme 20, 22 zur Befestigung auf, nämlich mehrere Leiterseilaufnahmen 20 und eine Tragseilaufnahme 22. In der Grundstellung verlaufen die Seile 12, 14 senkrecht zu einer Querebene Q. Die Leiterseile 12 weisen also jeweils eine Leiterseillängsachse S1 auf und das Tragseil 14 eine Tragseillängsachse S2, welche senkrecht zur Querebene Q verlaufen. In den gezeigten Ausführungsbeispielen ist der Bündelabstandshalter 16 sogar derart ausgebildet, dass das Traggestell 18 ebenfalls grundsätzlich senkrecht zu Seilen 12, 14 angeordnet ist und die Querebene Q aufspannt. Um einen gewissen Bewegungsspielraum für die Seile 12, 14 relativ zueinander bereitzustellen weist das Traggestellt 18 eine gewisse Flexibilität auf und hierzu ein Gelenk 24, mittels welchem zumindest eines der Leiterseile 12 relativ zum Tragseil 14 um eine Drehachse D drehbeweglich gehaltert ist, wobei die Drehachse D senkrecht zur Querebene Q verläuft.

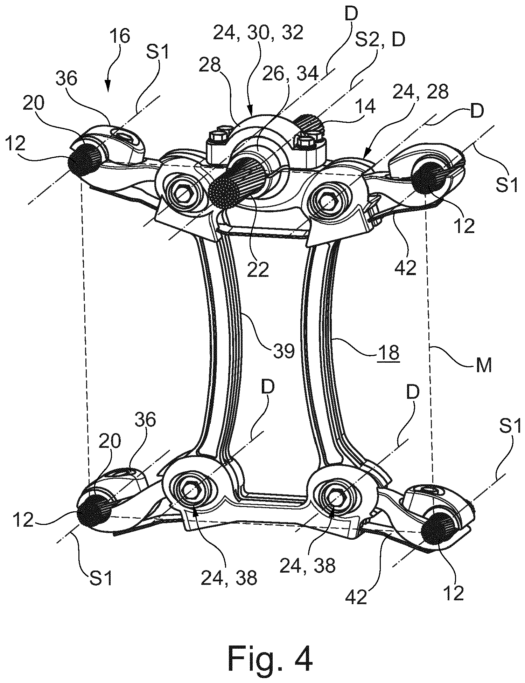

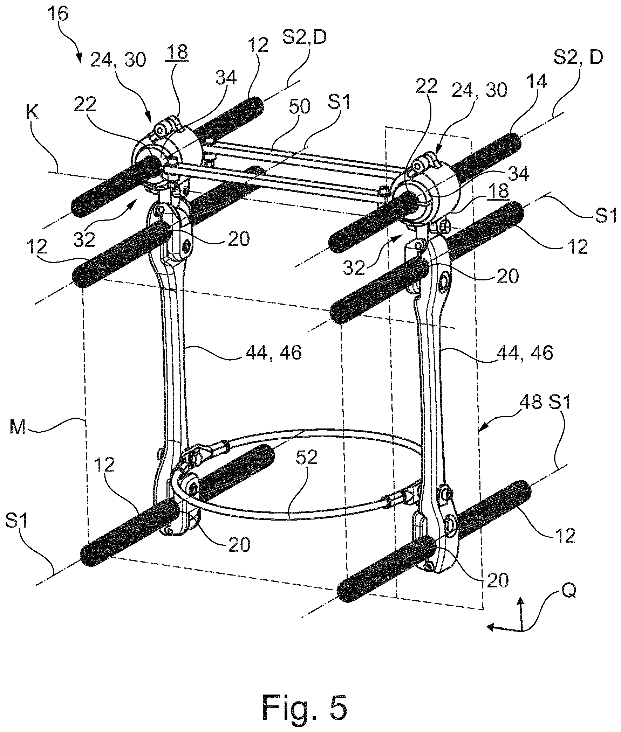

Die Leiterseilaufnahmen 20 bilden gemeinsam Ecken eines Mehrecks M, hier eines Quadrats, mit einer Seitenlänge, welche prinzipbedingt dem Abstand A1 der Leiterseile 12 in montiertem Zustand entspricht. Das Mehreck M ist parallel zur Querebene Q und liegt insbesondere in dieser. Die Tragseilaufnahme 22, d.h. in montiertem Zustand auch das Tragseil 14 ist am Rand des Mehrecks M angeordnet, wie in den Fig. 3 und 4 gezeigt oder außerhalb des Mehrecks M, wie in Fig. 5 gezeigt.

Der in Fig. 3 dargestellte Bündelabstandshalter 16 weist insgesamt fünf Gelenke 24 auf, welche eine Drehung der Leiterseile 12 relativ zum Tragseil 14 um entsprechende Drehachsen D ermöglichen. Eines der Gelenke 24 ist als Kugelgelenk mit einer Kugel 26 und einer Pfanne 28 ausgebildet und damit sowohl als ein Drehlager 30 als auch als ein Kippgelenk 32. In der Funktion als Drehlager 26 ist das Tragseil 14 in dem Gelenk 24 befestigt und dadurch ist das gesamte Traggestell 18 mit den daran befestigen Leiterseilen 12 um die Tragseillängsachse S2 als Drehachse D des Drehlagers 30 drehbar, d.h. drehbeweglich gehaltert. In der Funktion als Kippgelenk 32 sind die Leiterseile 12 und hier sogar das gesamte Traggestell 18 relativ zum Tragseil 14 kippbar, d.h. kippbeweglich um eine Kippachse K gehaltert, welche parallel zur Querebene Q verläuft. Aufgrund der Integration dieser Kippfunktionalität in ein Kugelgelenk, sind effektiv mehrere Kippachsen K vorhanden, da die Kugel 26 prinzipbedingt in der Pfanne 28 in beliebiger Richtung verkippbar ist.

In einer Alternative ist die Kippfunktionalität an anderer Stelle des Bündelabstandshalters 16 realisiert und das Gelenk 24 mit dem darin befestigten Tragseil 14 ist lediglich als Drehlager 30 ausgebildet, beispielsweise als Rolllager mit einem Zylinder oder einer Tonne anstelle der Kugel 26 und einer entsprechend geeignet geformten Pfanne 28. Je nach Positionierung des Kippgelenks 32 ist es dann möglich, lediglich eine Teilmenge der Leiterseile 12 oder sogar lediglich ein einzelnes Leiterseil 12 relativ zum Tragseil 14 zu verkippen. Auf ein solches Gelenk 24 als reines Drehlager 30 wird weiter unten im Zusammenhang mit Fig. 5 noch näher eingegangen.

Das Gelenk 24, welches am Tragseil 14 befestigt ist, weist zur Befestigung ein Klemmteil 34 auf, welches die Tragseilaufnahme 22 bildet. In dem gezeigten Ausführungsbeispiel ist das Klemmteil 34 zugleich die Kugel 26 des Gelenks 24. Das Klemmteil 34 ist zudem hier als Kombination von zwei Halbschalen ausgebildet, welche das Tragseil 14 umgreifen. Die Halbschalen sind dann z.B. miteinander verschraubt. Denkbar ist auch eine schraubenlose Montage des Klemmteils 34, bei welcher am Tragseil 14 ein Formteil mittels einer Spiralklemme befestigt wird, welches in einer geeignet geformten Ausnehmung innerhalb des Klemmteils 34 formschlüssig, zumindest in Richtung der Tragseillängsachse S2, einsitzt. Allgemein ist das Tragseil mittels des Klemmteils 34 in axialer Richtung, d.h. in Richtung der Tragseillängsachse S2 fixiert und verrutschsicher gehaltert.

Das Traggestell 18 in Fig. 3 weist weiterhin mehrere Schwenkarme 36 auf, zur Halterung jeweils eines der Leiterseile 12. Die Schwenkarme 36 sind mittels der Gelenke 24, welche als Armgelenke 38 ausgebildet sind, an einem Rahmen 39 des Traggestellt 18 angebracht und in der Querebene drehbar um Drehachsen D gelagert. Entsprechend sind die Leiterseile 12 individuell relativ zum Tragseil 14 drehbar, und zwar um Drehachsen D, welche parallel zur Tragseillängsachse S2 und senkrecht zur Querebene verlaufen. Insgesamt ist somit mittels sämtlicher Gelenke 24 für jedes der Leiterseile 12 eine doppelte Drehfunktionalität relativ zum Leiterseil realisiert, nämlich zum Einen im Verbund um die Tragseillängsachse S2 und zum Anderen jeweils einzeln um eine entsprechende Drehachse D. Diese Kombination ist jedoch nicht zwingend, vielmehr wird in einer nicht gezeigten Variante lediglich das Drehlager 26 für das das Tragseil 14 verwendet und es sind keine zusätzlichen Schwenkarme 36 ausgebildet oder es sind Schwenkarme 36 ausgebildet, jedoch ist das Tragseil 14 nicht drehbar relativ zum Traggestell 18.

In Fig. 3 sind die Schwenkarme 36 hängend am Rahmen 39 gelagert, sodass die Grundstellung durch die auf die Leiterseile 12 wirkende Gewichtskraft definiert ist. Bei einer insbesondere seitlichen Krafteinwirkung werden die Schwenkarme 36 dann entsprechend ausgelenkt. Dabei ist der Bewegungsspielraum, d.h. die Drehbarkeit eines jeweiligen Schwenkarms 36 durch einen Anschlag 40 beschränkt, hier sogar in beiden Richtungen durch zwei Anschläge 40, welche durch den Rahmen 39 des Traggestells 18 selbst gebildet sind.

Fig. 4 zeigt eine Variante des Bündelabstandshalters 16, welcher grundsätzlich ähnlich der in Fig. 3 gezeigten Variante ausgebildet ist. Insofern gelten die obigen Ausführungen auch im Zusammenhang mit Fig. 4. Ein Unterschied besteht jedoch in der Lagerung der Schwenkarme 36, welche hier nicht hängend erfolgt, sondern federelastisch mittels Armfedern 42. Mittels dieser sind die Schwenkarme 36 jeweils in der Grundstellung gehalten und bei einer Belastung in zwei Richtungen um die jeweilige Drehachse D herum drehbar und auslenkbar. Die Armfeder 42 ist dabei derart ausgelegt, dass deren Federwirkung in der Grundstellung die Gewichtskraft auf die Leiterseile 12 kompensiert. Die Federwirkung beschränkt insbesondere auch die Drehung eines jeweiligen Schwenkarms 36 auf einen bestimmten Winkel, z.B. 12° ausgehend von der Grundstellung und in beiden Richtungen. Im gezeigten Ausführungsbeispiel ist die Armfeder 42 als Blattfeder ausgebildet, welche am Rahmen 39 des Traggestells 18 gehaltert ist. In der speziellen Ausgestaltung in Fig. 4 wird zudem jeweils eine Armfeder 42 für zwei Schwenkarme 36 verwendet und erstreckt sich dazu durchgängig durch den Rahmen 39 hindurch. Geeignet ist jedoch auch eine Variante mit einer separaten Armfeder 42 für jeden einzelnen der Schwenkarme 36.

In Fig. 5 ist eine dritte Variante des Bündelabstandshalters 16 mit darin montierten Seilen 12, 14 gezeigt. Ein wesentlicher Unterschied zu den beiden vorgenannten Varianten der Fig. 3 und 4 besteht insbesondere darin, dass nunmehr zwei Tragseile 14 montiert sind und das Traggestellt 18 dazu auch zwei Tragseilaufnahmen 22 aufweist. Beide Tragseile 14 sind außerhalb des Mehrecks M angeordnet.

Grundsätzlich ist aber auch mit dem in Fig. 5 gezeigten Bündelabstandshalter 16 eine zumindest ähnliche Flexibilität, d.h. Dreh- und Kippbeweglichkeit bezüglich einer Bewegung der Leiterseile 12 relativ zu den Tragseilen 14 realisiert. Die Tragseil 14 sind auch hier jeweils in einem Gelenk 24 befestigt, welches hier jedoch lediglich als Drehlager 30 ausgebildet ist und kein Kugelgelenk ist. Dadurch ist zunächst eine Drehbeweglichkeit der Leiterseile 12 um die beiden Tragseillängsachsen S2 realisiert. Auch eine Kippbeweglichkeit ist möglich, diese ist hier jedoch von den Drehlagern 30 räumlich getrennt durch separate Kippgelenke 32 realisiert. Diese verbinden eine jeweilige Tragseilaufnahme 22 mit einem Kipparm 44, welcher folglich relativ zum Tragseil 14 verkippbar ist, und zwar vor und zurück nach Art eines Pendels oder einer Schaukel, d.h. um eine Kippachse K, welche parallel zur Querebene verläuft. In Fig. 5 sind zwei Kippgelenke 32 ausgebildet, welche eine gemeinsame Kippachse K aufweisen.

Die Kipparme 44 sind hier zugleich Tragarme 46 des Traggestells 18, welche jeweils mehrere, hier zwei Leiterseilaufnahmen 20 aufweisen. Diese sind an gegenüberliegenden Enden des jeweiligen Tragarms 46 angeordnet. Denkbar ist auch eine Ausgestaltung, bei welcher auf die Kippgelenke 32 verzichtet wird und lediglich Tragarme 46 ausgebildet sind, welche dann keine Kipparme 44 sind. Die Tragarme 46 sind dann starr mit einer jeweiligen Tragseilaufnahme 22 verbunden.

Bei einem jeweiligen Tragarm 46 sind die mittels diesem gehalterten Leiterseile 12 fest zueinander beabstandet. Ein jeweiliger Tragarm 46 bildet gemeinsam mit der entsprechenden Tragseilaufnahme 22 ein Teilgestell 48 des Traggestells 18. In Fig. 5 weist der Bündelabstandshalter 16 demnach zwei Teilgestelle 48 auf. Diese sind mechanisch miteinander gekoppelt, um in der Grundstellung einen definierten Abstand zwischen den Seilen 12, 14 der verschiedenen Teilgestelle 48 einzustellen. Dazu sind die beiden Tragseilaufnahmen 22 über eine Querverstrebung 50 miteinander verbunden. Auf einen Rahmen 39 wird dabei insbesondere verzichtet. Die Querverstrebung ist im gezeigten Ausführungsbeispiel zusätzlich als Schergelenk 52 ausgebildet, mittels dessen die Tragseile 14 in montiertem Zustand relativ zueinander scherbeweglich angeordnet sind, d.h. in Tragseillängsrichtung S2 gegeneinander verschiebbar sind. Dazu ist die Querverstrebung 50 als zwei Streben ausgebildet, welche an den Tragseilaufnahmen 22 jeweils um eine Achse drehbar angebracht sind, welche parallel zur Querebene Q verläuft.

Weiterhin sind im Ausführungsbeispiel der Fig. 5 die Tragarme 46 über ein Federelement 52 federelastisch miteinander verbunden, sodass die Tragarme 46 aus der Grundstellung heraus auslenkbar sind, dabei jedoch eine Rückstellkraft hin zur Grundstellung wirkt. Das Federelement 52 ist hier als Federring ausgebildet, welcher besonders viele Freiheitsgrade aufweist. Insbesondere sind in Kombination mit den Drehlagern 30 gegenphasige Pendelbewegungen der Tragarme 46 in der Querebene Q möglich, d.h. aufeinander zu und voneinander weg. In Kombination mit den Kippgelenken 32 sind dann auch gegenphasige Pendelbewegungen der Tragarme 46 senkrecht zur Querebene Q möglich, d.h. wechselseitig vor und zurück. Insgesamt ist somit das in der Grundstellung als Quadrat vorliegende Mehreck M zu einem Trapez oder Parallelogramm verformbar sowie in diversen Richtungen kippbar und/oder drehbar. Analoges gilt für das aus den Tragarmen 46, der Querverstrebung 50 und dem Federelement 52 gebildete Rechteck.

### Bezugszeichenliste

- 2: Freileitung
- 4: Tragmast
- 6: Bündelleiter
- 8: Erdungsseil
- 10: Tragkette
- 12: Leiterseil
- 14: Tragseil
- 16: Bündelabstandshalter
- 18: Traggestell
- 20: Leiterseilaufnahme
- 22: Tragseilaufnahme
- 24: Gelenk
- 26: Kugel
- 28: Pfanne
- 30: Drehlager
- 32: Kippgelenk
- 34: Klemmteil
- 36: Schwenkarm
- 38: Armgelenk
- 39: Rahmen
- 40: Anschlag
- 42: Armfeder
- 44: Kipparm
- 46: Tragarm
- 48: Teilgestell
- 50: Querverstrebung
- 52: Federelement

- A1, A2, A3: Abstand
- D: Drehachse
- K: Kippachse
- M: Mehreck
- Q: Querebene
- S1: Leiterseillängsachse
- S2: Tragseillängsachse

## Patentansprüche

1. Bündelabstandshalter (16) zur Halterung und Beabstandung von Seilen (12, 14) einer Freileitung (2), nämlich von mehreren Leiterseilen (12) und einem Tragseil (14), mit einem Traggestell (18), welches die Seile (12, 14) in einem montierten Zustand in einer Grundstellung anordnet und welches für jedes der Seile (12, 14) jeweils eine Aufnahme (20, 22) zur Befestigung aufweist, nämlich mehrere Leiterseilaufnahmen (20) und eine Tragseilaufnahme (22), wobei die Seile (12, 14) in der Grundstellung senkrecht zu einer Querebene (Q) verlaufen,
**dadurch gekennzeichnet,**
**dass** das Traggestell (18) ein Gelenk (24) aufweist, mittels welchem zumindest eines der Leiterseile (12) relativ zum Tragseil (14) um eine Drehachse (D) drehbeweglich gehaltert ist, welche senkrecht zur Querebene (Q) verläuft, und dass das Gelenk (24) als Drehlager (30) ausgebildet ist, in welchem das Tragseil (14) befestigbar ist, und dass mittels des Gelenks (24) das Traggestell (18) relativ zum Tragseil (14) drehbeweglich gehaltert ist und in der Querebene (Q) um das Tragseil (14) herum drehbar ist.

2. Bündelabstandshalter (16) nach dem vorhergehenden Anspruch,
**dadurch gekennzeichnet,**
**dass** das Gelenk (24) ein Klemmteil (34) aufweist, welches die Tragseilaufnahme (22) bildet.

3. Bündelabstandshalter (16) nach einem der vorhergehenden Ansprüche,
**dadurch gekennzeichnet,**
**dass** das Traggestell (18) ein Kippgelenk (32) aufweist, mittels welchem die Leiterseile (12) relativ zum Tragseil (14) kippbeweglich um eine Kippachse (K) gehaltert sind, wobei die Kippachse (K) parallel zur Querebene (Q) verläuft.

4. Bündelabstandshalter (16) nach Anspruch 3,
**dadurch gekennzeichnet,**
**dass** das Gelenk (24) als Kugelgelenk mit einer Kugel (26) und einer Pfanne (28) ausgebildet ist und zugleich das Drehlager (30) und das Kippgelenk (32) bildet.

5. Bündelabstandshalter (16) nach einem der vorhergehenden Ansprüche,
**dadurch gekennzeichnet,**
**dass** das Traggestell (18) einen Schwenkarm (36) aufweist, zur Halterung eines der Leiterseile (12), sowie weiterhin ein Armgelenk (38), mittels welchem der Schwenkarm (36) in der Querebene (Q) drehbar gelagert ist, wobei der Schwenkarm (36) in der Grundstellung insbesondere hängend gelagert ist.

6. Bündelabstandshalter (16) nach dem vorhergehenden Anspruch,
**dadurch gekennzeichnet,**
**dass** das Traggestell (18) einen Anschlag (40) aufweist, welcher eine Drehung des Schwenkarms (36) mittels des Armgelenks (38) begrenzt und zwar insbesondere auf einen Winkel von 30°.

7. Bündelabstandshalter (16) nach Anspruch 5,
**dadurch gekennzeichnet,**
**dass** der Schwenkarm (36) mittels einer Armfederung (42) federelastisch in der Grundstellung fixiert ist und die Armfederung (42) bevorzugt eine Drehung des Schwenkarms (36) ausgehend von der Grundstellung in beiden Richtungen beschränkt.

8. Bündelabstandshalter (16) nach dem vorhergehenden Anspruch,
**dadurch gekennzeichnet,**
**dass** zwei Leiterseile (12) jeweils mittels eines Schwenkarms (36) drehbar gehaltert sind und dass die Armfederung (42) die beiden Schwenkarme (36) federelastisch in der Grundstellung fixiert.

9. Bündelabstandshalter (16) nach Anspruch 3,
**dadurch gekennzeichnet,**
**dass** das Traggestell (18) einen Kipparm (44) aufweist, mit zumindest einer, vorzugsweise zwei Leiterseilaufnahmen (20), wobei der Kipparm (44) mittels des Kippgelenks (32) mit der Tragseilaufnahme (22) verbunden ist, zur Verkippung des Kipparms (44) relativ zum Tragseil (14).

10. Bündelabstandshalter (16) nach einem der vorhergehenden Ansprüche,
**dadurch gekennzeichnet,**
**dass** das Traggestell (18) zwei Tragarme (46) aufweist und zwei Tragseilaufnahmen (22), welche jeweils mit einem der Tragarme (46) verbunden sind, wobei die beiden Tragseilaufnahmen (22) über eine Querverstrebung (50) miteinander verbunden sind.

11. Bündelabstandshalter (16) nach dem vorhergehenden Anspruch,
**dadurch gekennzeichnet,**
**dass** die Querverstrebung (50) als Schergelenk ausgebildet ist, mittels dessen die Tragseile (14) in montiertem Zustand relativ zueinander scherbeweglich angeordnet sind.

12. Bündelabstandshalter (16) nach einem der beiden vorhergehenden Ansprüche,
**dadurch gekennzeichnet,**
**dass** die Tragarme (46) über ein Federelement (52) federelastisch miteinander verbunden sind, zur reversiblen Auslenkung aus der Grundstellung heraus.

13. Bündelabstandshalter (16) nach Anspruch 9 und nach einem der Ansprüche 10 bis 12,
**dadurch gekennzeichnet,**
**dass** der Kipparm (44) der Tragarm (46) ist.

14. Freileitung (2), mit einer Anzahl an Tragmasten (4), mit zumindest einem Bündelleiter (6), welcher entlang der Tragmasten (4) abgespannt ist und welcher mehrere Seile (12, 14) aufweist, nämlich mehrere Leiterseile (12) und zumindest ein Tragseil (14), und weiterhin mit einem Bündelabstandshalter (16) nach einem der vorhergehenden Ansprüche, mittels welchem die Seile (12, 14) gehaltert und voneinander beabstandet sind, wobei der Bündelabstandshalter (16) ein Traggestell (18) aufweist, welches die Seile (12, 14) in einer Grundstellung anordnet und welches für jedes der Seile (12, 14) jeweils eine Aufnahme (20, 22) zur Befestigung aufweist, nämlich mehrere Leiterseilaufnahmen (20) und eine Tragseilaufnahme (22), wobei die Seile (12, 14) in der Grundstellung senkrecht zu einer Querebene (Q) verlaufen und wobei das Traggestell (18) ein Gelenk (24) aufweist, mittels welchem zumindest eines der Leiterseile (12) relativ zum Tragseil (14) um eine Drehachse (D) drehbeweglich gehaltert ist, welche senkrecht zur Querebene (Q) verläuft, wobei das Gelenk (24) als Drehlager (30) ausgebildet ist, in welchem das Tragseil (14) befestigbar ist, und dass mittels des Gelenks (24) das Traggestell (18) relativ zum Tragseil (14) drehbeweglich gehaltert ist und in der Querebene (Q) um das Tragseil (14) herum drehbar ist.

15. Freileitung (2) nach Anspruch 14, wobei lediglich das Tragseil (14) des Bündelleiters (6) an den Tragmasten (4) abgespannt ist und die Leiterseile (12) mittels des Bündelabstandshalters (16) am Tragseil (14) gehaltert sind.

## Claims

1. Bundle spacer (16) for holding and spacing apart cables (12, 14) of an overhead line (2), specifically a plurality of conductor cables (12) and one carrying cable (14), comprising a supporting frame (18) which arranges the cables (12, 14) in a home position in a mounted state and which has in each case one fastening receptacle (20, 22) for each of the cables (12, 14), specifically a plurality of conductor cable receptacles (20) and one carrying cable receptacle (22), wherein the cables (12, 14) run perpendicularly in relation to a transverse plane (Q) in the home position,
**characterized**
**in that** the supporting frame (18) has a joint (24) by means of which at least one of the conductor cables (12) is held such that it can move in a rotational manner about a rotation axis (D), which runs perpendicularly in relation to the transverse plane (Q), relative to the carrying cable (14), and in that the joint (24) is designed as a rotary bearing (30) in which the carrying cable (14) can be fastened, and in that, by means of the joint (24), the supporting frame (18) is held such that it can move in a rotational manner relative to the carrying cable (14) and can be rotated about the carrying cable (14) in the transverse plane (Q).

2. Bundle spacer (16) according to the preceding claim,
**characterized in that**
the joint (24) has a clamping part (34) which forms the carrying cable receptacle (22).

3. Bundle spacer (16) according to either of the preceding claims,
**characterized in that**
the supporting frame (18) has a tilting joint (32) by means of which the conductor cables (12) are held such that they can move in a tilting manner about a tilting axis (K) relative to the carrying cable (14), wherein the tilting axis (K) runs parallel in relation to the transverse plane (Q).

4. Bundle spacer (16) according to Claim 3,
**characterized in that**
the joint (24) is designed as a ball joint with a ball (26) and a socket (28) and at the same time forms the rotary bearing (30) and the tilting joint (32).

5. Bundle spacer (16) according to one of the preceding claims,
**characterized**
**in that** the supporting frame (18) has a pivot arm (36) for holding one of the conductor cables (12), and also furthermore an arm joint (38) by means of which the pivot arm (36) is mounted in a rotatable manner in the transverse plane (Q), wherein the pivot arm (36) is mounted, in particular, in a suspended manner in the home position.

6. Bundle spacer (16) according to the preceding claim,
**characterized**
**in that** the supporting frame (18) has a stop (40) which limits a rotation of the pivot arm (36) by means of the arm joint (38), specifically in particular to an angle of 30°.

7. Bundle spacer (16) according to Claim 5,
**characterized**
**in that** the pivot arm (36) is fixed in the home position in a spring-elastic manner by means of an arm spring system (42), and the arm spring system (42) preferably limits a rotation of the pivot arm (36) in both directions starting from the home position.

8. Bundle spacer (16) according to the preceding claim,
**characterized**
**in that** two conductor cables (12) are each held in a rotatable manner by means of a pivot arm (36), and in that the arm spring system (42) fixes the two pivot arms (36) in the home position in a spring-elastic manner.

9. Bundle spacer (16) according to Claim 3,
**characterized**
**in that** the supporting frame (18) has a tilting arm (44) comprising at least one, preferably two, conductor cable receptacles (20), wherein the tilting arm (44) is connected to the carrying cable receptacle (22) by means of the tilting joint (32) for the purpose of tilting the tilting arm (44) relative to the carrying cable (14).

10. Bundle spacer (16) according to one of the preceding claims,
**characterized**
**in that** the supporting frame (18) has two supporting arms (46) and two carrying cable receptacles (22) which are each connected to one of the supporting arms (46), wherein the two carrying cable receptacles (22) are connected to one another by means of a transverse strut arrangement (50) .

11. Bundle spacer (16) according to the preceding claim,
**characterized**
**in that** the transverse strut arrangement (50) is designed as a shear joint by means of which the carrying cables (14) are arranged such that they can perform a shear movement relative to one another in the mounted state.

12. Bundle spacer (16) according to either of the two preceding claims,
**characterized**
**in that** the supporting arms (46) are connected to one another in a spring-elastic manner by means of a spring element (52) for reversible deflection out of the home position.

13. Bundle spacer (16) according to Claim 9 and according to one of Claims 10 to 12,
**characterized**
**in that** the tilting arm (44) is the supporting arm (46) .

14. Overhead line (2) comprising a number of supporting masts (4), comprising at least one bundle conductor (6) which is tensioned along the supporting masts (4) and which has a plurality of cables (12, 14), specifically a plurality of conductor cables (12) and at least one carrying cable (14), and furthermore comprising a bundle spacer (16) according to one of the preceding claims, by means of which bundle spacer the cables (12, 14) are held and spaced apart from one another, wherein the bundle spacer (16) has a supporting frame (18) which arranges the cables (12, 14) in a home position and which has in each case one fastening receptacle (20, 22) for each of the cables (12, 14), specifically a plurality of conductor cable receptacles (20) and one carrying cable receptacle (22), wherein the cables (12, 14) run perpendicularly in relation to a transverse plane (Q) in the home position, and wherein the supporting frame (18) has a joint (24) by means of which at least one of the conductor cables (12) is held such that it can move in a rotational manner about a rotation axis (D), which runs perpendicularly in relation to the transverse plane (Q), relative to the carrying cable (14), wherein the joint (24) is designed as a rotary bearing (30) in which the carrying cable (14) can be fastened, and that the supporting frame (18) is held by means of the joint (24) such that it can move in a rotational manner relative to the carrying cable (14) and can be rotated about the carrying cable (14) in the transverse plane (Q) .

15. Overhead line (2) according to Claim 14, wherein only the carrying cable (14) of the bundle conductor (6) is tensioned on the supporting masts (4) and the conductor cables (12) are held on the carrying cable (14) by means of the bundle spacer (16).

## Revendications

1. Ecarteur de faisceaux (16) pour fixer et écarter des câbles (12, 14) d'une ligne aérienne (2), à savoir plusieurs câbles conducteurs (12) et un câble porteur (14), comprenant un châssis porteur (18) qui dispose les câbles (12, 14) dans un état monté dans une position de base et qui présente, pour chacun des câbles (12, 14), à chaque fois un logement (20, 22) pour la fixation, à savoir plusieurs logements de câbles conducteurs (20) et un logement de câble porteur (22), les câbles (12, 14), dans la position de base, s'étendant perpendiculairement à un plan transversal (Q),
**caractérisé en ce que**
le châssis porteur (18) présente une articulation (24) au moyen de laquelle au moins l'un des câbles conducteurs (12) est fixé de manière mobile en rotation par rapport au câble porteur (14) autour d'un axe de rotation (D) qui s'étend perpendiculairement au plan transversal (Q), et
**en ce que** l'articulation (24) est réalisée sous forme de palier pivotant (30) dans lequel peut être fixé le câble porteur (14), et **en ce que** le châssis porteur (18) est fixé de manière mobile en rotation par rapport au câble porteur (14) au moyen de l'articulation (24) et peut tourner autour du câble porteur (14) dans le plan transversal (Q).

2. Écarteur de faisceaux (16) selon la revendication précédente,
**caractérisé en ce que**
l'articulation (24) présente une partie de serrage (34) qui forme le logement de câble porteur (22).

3. Écarteur de faisceaux (16) selon l'une quelconque des revendications précédentes,
**caractérisé en ce que**
le châssis porteur (18) présente une articulation basculante (32) au moyen de laquelle les câbles conducteurs (12) sont fixés de manière à pouvoir être basculés autour d'un axe de basculement (K) par rapport au câble porteur (14), l'axe de basculement (K) s'étendant parallèlement au plan transversal (Q).

4. Écarteur de faisceaux (16) selon la revendication 3,
**caractérisé en ce que**
l'articulation (24) est réalisée sous forme d'articulation sphérique avec une rotule (26) et une cavité articulaire (28) et forme en même temps le palier pivotant (30) et l'articulation basculante (32) .

5. Écarteur de faisceaux (16) selon l'une quelconque des revendications précédentes,
**caractérisé en ce que**
le châssis porteur (18) présente un bras pivotant (36) pour la fixation de l'un des câbles conducteurs (12), ainsi qu'en outre une articulation de bras (38) au moyen de laquelle le bras pivotant (36) est supporté de manière rotative dans le plan transversal (Q), le bras pivotant (36) étant supporté notamment en suspension dans la position de base.

6. Écarteur de faisceaux (16) selon la revendication précédente,
**caractérisé en ce que**
le châssis porteur (18) présente une butée (40) qui limite une rotation du bras pivotant (36) au moyen de l'articulation de bras (38), à savoir notamment à un angle de 30°.

7. Écarteur de faisceaux (16) selon la revendication 5,
**caractérisé en ce que**
le bras pivotant (36) est fixé dans la position de base de manière élastique à ressort au moyen d'une suspension de bras (42) et la suspension de bras (42) limite de préférence une rotation du bras pivotant (36) dans les deux sens à partir de la position de base.

8. Écarteur de faisceaux (16) selon la revendication précédente,
**caractérisé en ce que**
deux câbles conducteurs (12) sont à chaque fois fixés de manière rotative au moyen d'un bras pivotant (36) et **en ce que** la suspension de bras (42) fixe les deux bras pivotants (36) de manière élastique à ressort dans la position de base.

9. Écarteur de faisceaux (16) selon la revendication 3,
**caractérisé en ce que**
le châssis porteur (18) présente un bras basculant (44) avec au moins un, de préférence deux, logements de câbles conducteurs (20), le bras basculant (44) étant connecté au logement de câble porteur (22) au moyen de l'articulation basculante (32), afin de faire basculer le bras basculant (44) par rapport au câble porteur (14).

10. Écarteur de faisceaux (16) selon l'une quelconque des revendications précédentes,
**caractérisé en ce que**
le châssis porteur (18) présente deux bras de support (46) et deux logements de câble porteur (22) qui sont chacun connectés à l'un des bras de support (46), les deux logements de câble porteur (22) étant connectés l'un à l'autre par le biais d'une entretoise transversale (50).

11. Écarteur de faisceaux (16) selon la revendication précédente,
**caractérisé en ce que**
l'entretoise transversale (50) est réalisée sous forme d'articulation à ciseaux au moyen de laquelle les câbles porteurs (14) sont disposés de manière déplaçable par cisaillement l'un par rapport à l'autre dans l'état monté.

12. Écarteur de faisceaux (16) selon l'une quelconque des deux revendications précédentes,
**caractérisé en ce que**
les bras de support (46) sont connectés l'un à l'autre de manière élastique à ressort par le biais d'un élément de ressort (52), afin de provoquer une déviation réversible à partir de la position de base.

13. Écarteur de faisceaux (16) selon la revendication 9, et selon l'une quelconque des revendications 10 à 12,
**caractérisé en ce que**
le bras basculant (44) est le bras de support (46) .

14. Ligne aérienne (2), comprenant une pluralité de mâts de support (4), au moins un conducteur en faisceau (6) qui est tendu le long des mâts de support (4) et qui présente plusieurs câbles (12, 14), à savoir plusieurs câbles conducteurs (12) et au moins un câble porteur (14), et comprenant en outre un écarteur de faisceaux (16) selon l'une quelconque des revendications précédentes, au moyen duquel les câbles (12, 14) sont fixés et espacés les uns des autres, l'écarteur de faisceaux (16) présentant un châssis porteur (18) qui dispose les câbles (12, 14) dans une position de base et qui présente, pour chacun des câbles (12, 14), à chaque fois un logement (20, 22) pour la fixation, à savoir plusieurs logements de câbles conducteurs (20) et un logement de câble porteur (22), les câbles (12, 14), dans la position de base, s'étendant perpendiculairement à un plan transversal (Q) et le châssis porteur (18) présentant une articulation (24) au moyen de laquelle au moins l'un des câbles conducteurs (12) est fixé de manière mobile en rotation par rapport au câble porteur (14) autour d'un axe de rotation (D) qui s'étend perpendiculairement au plan transversal (Q), l'articulation (24) étant réalisée sous forme de palier pivotant (30) dans lequel peut être fixé le câble porteur (14), et que le châssis porteur (18) est fixé de manière déplaçable en rotation par rapport au câble porteur (14) au moyen de l'articulation (24) et peut tourner autour du câble porteur (14) dans le plan transversal (Q).

15. Ligne aérienne (2) selon la revendication 14, dans laquelle seulement le câble porteur (14) du conducteur en faisceau (6) est tendu au niveau des mâts de support (4) et les câbles conducteurs (12) sont fixés sur le câble porteur (14) au moyen de l'écarteur de faisceaux (16).
